# EUROPEAN PATENT APPLICATION

(11) **EP 3 786 110 A1**
(43) Date of publication of application: **03.03.2021**
(21) Application number: 19792235.4
(22) Date of filing: 24.04.2019
(51) Int. Cl.: C01B 32/174, C08K 3/04, C08K 5/17, C08L 39/06, H01M 4/139, H01M 4/62

(54) **CARBON NANOTUBE DISPERSION AND USE FOR SAME**

(30) Priority: 26.04.2018 JP 2018085231
(71) Applicant: Toyo Ink SC Holdings Co., Ltd., Tokyo 104-0031 (JP); TOYOCOLOR CO., LTD., Tokyo, 104-8381 (JP)
(72) Inventor: MORITA Yu, Tokyo 104-8381 (JP); MASUOKA Tomoaki, Tokyo 104-8381 (JP)
(74) Representative: Becker, Eberhard
(86) International application number: PCT/JP2019/017447
(87) International publication number: WO 2019/208637

(57) **Abstract**

The problems of providing a carbon nanotube dispersion having N-methyl-2-pyrrolidone as a solvent and having excellent viscosity, dispersibility, and storage stability despite having a high carbon nanotube concentration, and of providing a cell electrode composite layer having uniform and satisfactory coating film properties and low electrode plate resistance, are solved by a carbon nanotube dispersion characterized by containing carbon nanotubes, polyvinyl pyrrolidone, N-methyl-2-pyrrolidone, and an amine compound as a dispersing auxiliary, the carbon nanotube dispersion containing 10 parts by weight to less than 25 parts by weight of polyvinyl pyrrolidone and containing 2 parts by weight to 10 parts by weight of an amine-based compound with respect to 100 parts by weight of the carbon nanotubes.

## Description

### Technical Field

The present invention relates to a carbon nanotube dispersion excellent in dispersibility of carbon nanotubes and storage stability. The present invention also relates to a battery electrode mixture layer and a lithium ion secondary battery containing the carbon nanotube dispersion.

### Background Art

In recent years, lithium secondary batteries have been actively developed along with the spread of mobile phones and laptop personal computers. Electrodes used in the lithium secondary batteries include a positive electrode and a negative electrode. The positive electrode includes an electrode mixture that contains a positive electrode active material containing lithium ions, a conductive aid, an organic binder and the like and that is fixed to a surface of a metal foil current collector. The negative electrode includes an electrode mixture that contains a negative electrode active material capable of desorption/insertion of lithium ions, a conductive aid, an organic binder and the like and that is fixed to a surface of a metal foil current collector.

In the positive electrode, a conductive material is blended to increase the conductivity of the active material. For the conductive material, carbon black, Ketjen black, fullerene, graphene, fine carbon materials and the like are considered as candidates. In particular, carbon nanotubes, which are one of fine carbon fibers, are carbon tubes having a diameter of 1 µm or less, and are considered as a candidate for a conductive aid used in lithium ion batteries due to their high conductivity based on their unique structure.

### Citation List

### Patent Literature

Patent Literature 1: JP 2005-162877 A
Patent Literature 2: JP 2011-70908 A
Patent Literature 3: JP 2015-30777 A

### Summary of Invention

### Technical Problem

Among carbon nanotubes, multi-walled carbon nanotubes having an outer diameter of ten to several tens of nanometers are becoming relatively inexpensive, and expected to be put to practical use in lithium ion battery applications. Use of carbon nanotubes having a small average outer diameter enables efficient formation of a conductive network with a small amount of carbon nanotubes, and is expected to reduce the amount of the conductive material contained in the electrode of the lithium ion battery. The carbon nanotubes having a small average outer diameter, however, have strong cohesive force, so that they have a problem that they hardly provide a carbon nanotube dispersion with sufficient dispersibility of carbon nanotubes.

In view of the above-mentioned problem, there have been proposed methods for stably dispersing carbon nanotubes using various dispersants. For example, Patent Literature 1 proposes dispersing carbon nanotubes in NMP using a water-soluble polymer polyvinylpyrrolidone (hereinafter referred to as PVP). Further, Patent Literature 2 describes dispersing carbon nanotubes using a nonionic resin-type dispersant typified by PVP. However, a high-concentration carbon nanotube dispersion produced using such resin-type dispersant may not have sufficient degree of dispersion of carbon nanotubes, and also has a problem that the carbon nanotube dispersion has a very high viscosity. When the carbon nanotube dispersion has a very high viscosity, due to poor fluidity of the dispersion, it becomes difficult to ensure the processability, homogeneity, and coatability of the liquid obtained by adding other components such as a binder component and an active material to the dispersion, so that a uniform coating layer is hardly obtained.

Further, Patent Literature 3 proposes a low-viscosity carbon black dispersion containing carbon black, a vinyl alcohol skeleton-containing resin as a dispersant, and an amine-based compound. Patent Literature 3, however, mentions carbon nanotubes as an example of carbon black in only one line in the detailed description, and does not mention carbon nanotubes in the examples. Therefore, effects of a carbon nanotube dispersion are unconfirmed. Further, Patent Literature 3 mentions polyvinylpyrrolidone also in only one line.

In view of the above-mentioned situation, an object of the present invention is to provide a carbon nanotube dispersion that contains N-methyl-2-pyrrolidone as a solvent and that is excellent in viscosity, dispersibility of carbon nanotubes, and storage stability even when the dispersion has a high concentration of carbon nanotubes. Another object of the present invention is to provide a homogeneous battery electrode mixture layer having satisfactory coating film properties and low electrode plate resistance.

### Solution to Problem

The present inventors, as a result of intensive studies to achieve the above-mentioned objects, found that when dispersing carbon nanotubes in a solvent, polyvinylpyrrolidone (PVP) as a dispersant and an amine-based compound as an additive are to be used, and that the amount of PVP used and the amount of the amine-based compound used each have a critical range in which the component greatly contributes to the dispersibility of carbon nanotubes. The present inventors also found that it is possible to produce a high-concentration, low-viscosity carbon nanotube dispersion that is satisfactory in long-term storage stability and suitable for lithium ion battery electrode applications when the amounts of PVP and the amine-based compound are each within a certain range, and completed the present invention.

That is, the present invention relates to a carbon nanotube dispersion containing (A) carbon nanotubes, (B) polyvinylpyrrolidone, (C) N-methyl-2-pyrrolidone, and (D) an amine-based compound, the carbon nanotube dispersion containing, based on 100 parts by weight of the carbon nanotubes (A), 10 parts by weight or more and less than 25 parts by weight of the polyvinylpyrrolidone (B), and 2 parts by weight or more and 10 parts by weight or less of the amine-based compound (D).

The present invention also relates to the carbon nanotube dispersion characterized in that the amine-based compound (D) is at least one amine-based compound selected from the group consisting of an aliphatic primary amine, an aliphatic secondary amine, an aliphatic tertiary amine, an amino acid, an alkanolamine, a polyoxyalkylene alkylamine, a polyamine, and a nitrogen-containing alicyclic heterocyclic compound.

The present invention also relates to a carbon nanotube dispersion for an electrode containing the carbon nanotube dispersion and an electrode active material.

The present invention also relates to a battery electrode mixture layer containing the carbon nanotube dispersion for an electrode formed into a layer.

The present invention also relates to a lithium ion secondary battery including the battery electrode mixture layer.

### Advantageous Effects of Invention

According to a preferred embodiment of the present invention, it is possible to provide a high-concentration, low-viscosity carbon nanotube dispersion having long-term storage stability. In particular, in lithium ion battery electrode applications, use of the dispersion provides a homogeneous battery electrode mixture layer having low electrode plate resistance, and thus contributes to improvement of the characteristics of the lithium ion battery.

### Description of Embodiments

The carbon nanotube dispersion in the present invention is characterized by containing carbon nanotubes, polyvinylpyrrolidone, an amine-based compound, and N-methyl-2-pyrrolidone. Details of the carbon nanotube dispersion will be described below. Herein, the "carbon nanotube dispersion" and the "carbon nanotube dispersion for batteries" are sometimes abbreviated as a "dispersion", and "N-methyl-2-pyrrolidone" is sometimes abbreviated as "NMP".

### <Carbon nanotubes (A)>

The carbon nanotubes (A) used in the present invention have a cylindrical shape obtained by winding planar graphite. The carbon nanotubes may be multi-walled carbon nanotubes, single-walled carbon nanotubes, or a mixture thereof. Single-walled carbon nanotubes have a structure in which one graphite layer is wound. Multi-walled carbon nanotubes have a structure in which two or more graphite layers are wound. Moreover, a side wall of the carbon nanotubes (A) does not have to have a graphite structure. For example, carbon nanotubes having a side wall having an amorphous structure can be used as the carbon nanotubes (A).

The shape of the carbon nanotubes (A) of the present embodiment is not limited. Examples of the shape include various shapes including an acicular shape, a cylindrical tube shape, a fish bone shape (fishbone or cup-stacked shape), a playing card shape (platelet shape), and a coil shape. In the present embodiment, the shape of the carbon nanotubes (A) is particularly preferably an acicular shape or a cylindrical tube shape. The carbon nanotubes (A) may have a single shape or a combination of two or more shapes.

The outer diameter of the carbon nanotubes (A) of the present embodiment is preferably 0.5 to 50 nm, 1 to 40 nm, 1 to 35 nm, or 5 to 25 nm, more preferably 8 to 20 nm, and still more preferably 10 to 15 nm.

Examples of the carbon nanotubes (A) having such outer diameter include, but are not limited to, single-walled carbon nanotubes such as ZEONANO SG101 (outer diameter: 3 to 5 nm) manufactured by Zeon Corporation and TUBALL (outer diameter: 1.2 to 2.0 nm) manufactured by OCSiAl. Examples of multi-walled carbon nanotubes having such outer diameter include, but are not limited to, Graphistrength (outer diameter: 10 to 15 nm) manufactured by ARKEMA K.K., HCNTs10 (outer diameter: 10 to 20 nm) and HCNTs40 (outer diameter: 30 to 50 nm) manufactured by SUSUN Sinotech New Materials, NC7000 (outer diameter: 10 nm) and NX7100 (outer diameter: 10 nm) manufactured by Nanocyl SA, JENOTUBE 8A (outer diameter: 6 to 9 nm), JENOTUBE 10A (outer diameter: 7 to 20 nm), and JENOTUBE 10B (outer diameter: 7 to 10 nm) manufactured by JEIO Co., Ltd., FloTube 9100 (outer diameter: 10 to 15 nm), FloTube 9110 (outer diameter: 10 to 15 nm), and FloTube 7010 (outer diameter: 7 to 11 nm) manufactured by CNano Technology Ltd., K-Nanos 100P (outer diameter: 10 to 15 nm), K-Nanos 100T (outer diameter: 10 to 15 nm), and K-Nanos 200P (outer diameter: 5 to 15 nm) manufactured by Kumho Petrochemical Co., Ltd., and NTP 3003 (outer diameter: 7 to 15 nm), NTP 3021 (outer diameter: 15 to 25 nm), NTP 3121 (outer diameter: 20 to 35 nm), and NTP 3221 (outer diameter: 15 to 25 nm) manufactured by Shenzhen Nanotech Port Co., Ltd.

### <Polyvinylpyrrolidone (B)>

The polyvinylpyrrolidone (B) (hereinafter also referred to as PVP) preferably has a weight average molecular weight (as determined by a viscosity measurement method) within the range of 2,000 to 3,500,000, 2,500 to 3,500,000, 3,000 to 3,500,000, 4,000 to 3,000,000, or 8,000 to 3,000,000. Specific examples of the PVP include trade names: Luvitec K17 (K-value: 15.0 to 19.0, low molecular weight), K30 (K-value: 27.0 to 33.0), K80 (K-value: 74.0 to 82.0), K85 (K-value: 84.0 to 88.0), K90 (K-value: 88.0 to 92.0), and K90HM (K-value: 92.0 to 96.0, high molecular weight) manufactured by BASF Japan Ltd., K-15, K-30, K-90, and K-120 manufactured by ISP Inc., trade names: Polyvinylpyrrolidone K-30 (K-value: 27.0 to 33.0), K-85 (K-value: 84.0 to 88.0), and K-90 (K-value: 88.0 to 96.0) manufactured by NIPPON SHOKUBAI CO., LTD., and trade names: PVP Mw 2500 and PVP Mw 4000 to 6000 manufactured by Polysciences, Inc. From the viewpoint of preventing an increase in viscosity, the K-value of the polyvinylpyrrolidone is preferably 150 or less, and more preferably 100 or less.

### <N-methyl-2-pyrrolidone (C)>

The N-methyl-2-pyrrolidone (NMP) (C) is used as a dispersion medium for the dispersion. In the present invention, one or more other solvents may be used as the dispersion medium in combination with NMP as long as the performance of PVP as a dispersant and the battery performance are not impaired, but it is preferred to use NMP alone in view of the industrial applicability envisaged by the present invention.

### <Amine-based compound (D)>

In the present invention, the amine-based compound (D) is used. The amine-based compound (D) used may be a primary amine, a secondary amine, or a tertiary amine, and does not include ammonia or a quaternary ammonium compound. Usable amine-based compounds include, other than monoamines, amine-based compounds having a plurality of amino groups in the molecule, such as diamines, triamines, tetramines, and polyamines. In addition to the above-mentioned compounds, amino acids and nitrogen-containing alicyclic heterocyclic compounds can also be used. Therefore, the amino group herein is a primary, secondary, or tertiary functional group.

The amine-based compound (D) used in the present invention is preferably at least one amine-based compound selected from the group consisting of an aliphatic primary amine, an aliphatic secondary amine, an aliphatic tertiary amine, an amino acid, an alkanolamine, a polyoxyalkylene alkylamine, a polyoxyalkyleneamine, a polyethyleneimine, a polyamine, and a nitrogen-containing alicyclic heterocyclic compound. The amine-based compound (D) is more preferably at least one amine-based compound having only one amino group, which is selected from the group consisting of an aliphatic primary amine, an aliphatic secondary amine, an aliphatic tertiary amine, an alkanolamine, and a polyoxyalkylene alkylamine.

The amine-based compound (D) used in the present invention can be used alone or in combination of two or more regardless of whether it is a commercially available product or a synthetic product.

Specific examples of the amine-based compound (D) include, but are not limited to, aliphatic primary amines such as ethylamine, octylamine, laurylamine, myristylamine, stearylamine, and oleylamine, aliphatic secondary amines such as diethylamine, dibutylamine, and distearylamine, aliphatic tertiary amines such as triethylamine, dimethyloctylamine, dimethyldecylamine, dimethyllaurylamine, dimethylmyristylamine, dimethylpalmitylamine, dimethylstearylamine, dimethylbehenylamine, dilaurylmonomethylamine, and trioctylamine, amino acids such as alanine, methionine, proline, serine, asparagine, glutamine, lysine, arginine, histidine, aspartic acid, glutamic acid, and cysteine, alkanolamines such as dimethylaminoethanol, monoethanolamine, diethanolamine, methyldiethanolamine, and triethanolamine, polyoxyalkylene alkylamines such as polyoxyethylene laurylamine, polyoxyethylene dodecylamine, and polyoxyethylene octadecylamine, polyoxyalkyleneamines (polyetheramines), polyethyleneimines, polyamines such as polyvinylamine, and nitrogen-containing alicyclic heterocyclic compounds such as hexamethylenetetramine, morpholine, and piperidine.

The amine-based compound (D) preferably has a molecular weight of 30 or more and 15,000 or less, more preferably 45 or more and 10,000 or less, still more preferably 89 or more and 1,200 or less, and particularly preferably 89 or more and 500 or less.

The amine-based compound (D) preferably has a number of carbon atoms of 2 or more and 1,000 or less, more preferably 3 or more and 700 or less, still more preferably 4 or more and 60 or less, and particularly preferably 4 or more and 24 or less.

When the amine-based compound (D) is an aliphatic amine, the number of carbon atoms of the amine-based compound (D) is preferably 2 or more and 40 or less, more preferably 8 or more and 36 or less, and particularly preferably 8 or more and 24 or less.

The amine-based compound (D) preferably has an acid dissociation constant (pKa) of 7 or more and 12 or less, more preferably 8 or more and 11 or less, and particularly preferably 9 or more and 10.5 or less. The acid dissociation constant is a value in an aqueous solution at 25°C.

From the viewpoint of storage stability of the dispersion, the number of amino groups contained in the amine-based compound (D) is preferably 1 or more and 4 or less, more preferably 1 or more and 2 or less, and particularly preferably 1.

As for the chemical structure of the amine-based compound (D), the amine-based compound (D) is preferably a nitrogen-containing alicyclic heterocyclic compound, an amine-based compound in which an amino group is covalently bonded to α carbon of a carbonyl group or a carboxyl group, and an amine-based compound other than an amine-based compound having two or more carbonyl groups or carboxyl groups.

It is preferred to dissolve the amine-based compound (D) in an amount of 1 part by weight or more based on 100 parts by weight of N-methyl-2-pyrrolidone at 0°C or higher and 40°C or lower under atmospheric pressure.

In the polyoxyalkylene alkylamine, an amino group contains nitrogen atoms preferably in an amount of 1 wt% or more and 15 wt% or less, and more preferably in an amount of 3 wt% or more and 6 wt% or less in one molecule.

### <Method for producing carbon nanotube dispersion>

The dispersion of the present invention is obtained by dispersing the carbon nanotubes (A) in the NMP (C) using the polyvinylpyrrolidone (B) as a dispersant and the amine-based compound (D) as an additive or a dispersant. In this case, the polyvinylpyrrolidone (B) and the carbon nanotubes (A) are added simultaneously or sequentially and mixed to disperse the carbon nanotubes (A) in the NMP (C) while allowing the polyvinylpyrrolidone (B) to act on (be adsorbed to) the carbon nanotubes (A). However, in order to produce the carbon nanotube dispersion more easily, it is more preferred to dissolve, swell, or disperse the polyvinylpyrrolidone (B) in the NMP (C), and then add the carbon nanotubes (A) to the resulting liquid and mix the liquid to allow the polyvinylpyrrolidone (B) to act on (be adsorbed to) the carbon nanotubes (A). Further, when, for example, an electrode active material for a secondary battery is added as a powder other than the carbon nanotubes (A) and the resulting mixture is used as an electrode mixture slurry, it is also possible to charge and disperse the polyvinylpyrrolidone (B), the carbon nanotubes (A), and the electrode active material simultaneously in the NMP (C).

The amine-based compound (D) may be added either before the polyvinylpyrrolidone (B) is allowed to act on the carbon nanotubes (A) or after the dispersion treatment is completed. In either case, a suitable effect is obtained.

A dispersion device used may be a disperser generally used for dispersing pigments and the like. Examples of the disperser include, but are not limited to, mixers such as dispers, homomixers, and planetary mixers, homogenizers ("CLEARMIX" manufactured by M Technique Co., Ltd., "FILMIX" and the like manufactured by PRIMIX Corporation, and "Abramix" and the like manufactured by Silverson Machines Ltd.), media type dispersers including paint conditioners (manufactured by Red Devil Inc.), colloid mills ("PUC Colloid Mill" manufactured by PROBST & CLASS GmbH & Co. KG and "Colloid Mill MK" manufactured by IKA Process Technology), cone mills ("Cone Mill MKO" and the like manufactured by IKA Process Technology), ball mills, sand mills ("DYNO-MILL" and the like manufactured by SHINMARU ENTERPRISES CORPORATION), attritors, pearl mills ("DCP mill" and the like manufactured by Nippon Eirich Co., Ltd.), and CoBall Mills, media-less dispersers including wet jet mills ("Genus PY" manufactured by Genus, "Star burst" manufactured by Sugino Machine Limited, and "Nanomizer" and the like manufactured by NANOMIZER Inc.), "CLEAR SS5" manufactured by M Technique Co., Ltd., and "MICROS" manufactured by Nara Machinery Co., Ltd., and roll mills.

In the present invention, the amount of the polyvinylpyrrolidone (B) added as a dispersant for the carbon nanotubes (A) is preferably 10 parts by weight or more and less than 25 parts by weight, more preferably 10 parts by weight or more and 20 parts by weight or less, and still more preferably 15 parts by weight or more and 20 parts by weight or less based on 100 parts by weight of the carbon nanotubes (A).

In the present invention, the amount of the amine-based compound (D) added based on the carbon nanotubes (A) is preferably 2 parts by weight or more and 10 parts by weight or less, and more preferably 2 parts by weight or more and 5 parts by weight or less based on 100 parts by weight of the carbon nanotubes (A).

In the present invention, the amount of the amine-based compound (D) added based on the polyvinylpyrrolidone (B) is preferably 10 parts by weight or more and 50 parts by weight or less, and more preferably 15 parts by weight or more and 33 parts by weight or less based on 100 parts by weight of the polyvinylpyrrolidone (B).

A compounding ratio of components within the above-mentioned range makes it possible to reduce the viscosity of the carbon nanotube dispersion, which is an object to be achieved by the present invention, and to readily obtain a high-concentration dispersion excellent in dispersibility of carbon nanotubes and storage stability.

### <Applications of carbon nanotube dispersion>

The field of use of the carbon nanotube dispersion of the present invention is not particularly limited, and the carbon nanotube dispersion is capable of providing a stable and uniform composition in a field in which light-shielding properties, conductivity, durability, jet blackness, and the like are required, such as gravure inks, offset inks, back coatings for magnetic recording media, electrostatic toners, ink jetting, automobile paints, fiber/plastic forming materials, seamless belts for electrophotography, and battery electrodes. In particular, due to the use of NMP, compatibility with polyvinylidene fluoride, and satisfactory dispersibility of the carbon nanotubes (A) even with a small amount of the polyvinylpyrrolidone (B) added as a dispersant, the carbon nanotube dispersion is especially suitably used in an electrode for a lithium ion secondary battery, an electrode for an electric double layer capacitor, an electrode for a lithium ion capacitor, and the like. This is because the polyvinylpyrrolidone (B), which is not conductive, serves as a resistance factor in the battery, and therefore it is desirable to reduce the amount of the polyvinylpyrrolidone (B) used in these electrode applications as much as possible.

### <Carbon nanotube dispersion for an electrode>

The carbon nanotube dispersion for an electrode of the present invention may further contain a binder and an electrode active material (a positive electrode active material or a negative electrode active material) as necessary.

For example, the carbon nanotube dispersion for an electrode further containing a binder such as polyvinylidene fluoride and polytetrafluoroethylene may form a primer layer of an electrode for a lithium ion secondary battery, an electrode for an electric double layer capacitor, or an electrode for a lithium ion capacitor. Alternatively, the carbon nanotube dispersion for an electrode further containing a positive electrode active material or a negative electrode active material, such as a lithium transition metal composite oxide such as lithium cobalt oxide and lithium manganese oxide, black lead, activated carbon, graphite, carbon nanotubes, and carbon nanofibers may form an electrode layer of an electrode for a lithium ion secondary battery, an electrode for an electric double layer capacitor, or an electrode for a lithium ion capacitor.

### <Active material>

The positive electrode active material for a lithium ion secondary battery is not particularly limited, and it is possible to use metal compounds such as metal oxides and metal sulfides, conductive polymers and the like that are capable of doping or intercalating lithium ions.

Examples of the positive electrode active material include inorganic compounds such as oxides of transition metals including Fe, Co, Ni, and Mn, composite oxides of transition metals with lithium, and transition metal sulfides. Specific examples include transition metal oxide powders such as MnO, V₂O₅, V₆O₁₃, and TiO₂, lithium-transition metal composite oxide powders such as lithium nickel oxide, lithium cobalt oxide, and lithium manganese oxide each having a layered structure, and lithium manganese oxide having a spinel structure, lithium iron phosphate materials that are phosphate compounds having an olivine structure, and transition metal sulfide powders such as TiS₂ and FeS. In addition, conductive polymers such as polyanilines, polyacetylenes, polypyrroles, and polythiophenes can also be used. Moreover, mixtures of the above-mentioned inorganic compounds and organic compounds may also be used.

The negative electrode active material for a lithium ion secondary battery is not particularly limited as long as the active material is capable of doping or intercalating lithium ions. Examples of the negative electrode active material include metal Li; Li alloys such as lithium-tin alloys, lithium-silicon alloys, and lithium-lead alloys; metal oxides such as LiₓFe₂O₃, LiₓFe₃O₄, LiₓWO₂, lithium titanium oxide, lithium vanadium oxide, and lithium silicon oxide; conductive polymers such as polyacetylenes and poly-p-phenylenes; and carbon materials including amorphous carbonaceous materials (for example, soft carbon and hard carbon), carbonaceous powders (for example, artificial graphite including highly graphitized carbon material, and natural graphite), carbon black, mesophase carbon black, resin-calcined carbon materials, vapor-grown carbon fibers, and carbon fibers. These negative electrode active materials may be used alone or in combination of two or more.

These active materials preferably each have an average particle size within the range of 0.05 to 100 µm, and more preferably within the range of 0.1 to 50 µm. The average particle size of the active material as used herein is the average of particle sizes of the active material measured with an electron microscope.

### <Battery electrode mixture layer>

The battery electrode mixture layer of the present invention contains the carbon tube dispersion for an electrode formed into a layer. The carbon tube dispersion for an electrode is applied to a current collector and dried to form a battery electrode mixture layer, whereby a battery electrode is provided.

### (Current collector)

The material and shape of the current collector used in the electrode are not particularly limited, and a current collector suitable for various batteries can be appropriately selected. Examples of the material of the current collector include metals and alloys such as aluminum, copper, nickel, titanium, and stainless steel. As for the shape of the current collector, flat foil is generally used, but a current collector having a roughened surface or a perforated foil shape, and a mesh current collector can also be used.

The method for applying the carbon tube dispersion for an electrode to the current collector is not particularly limited, and a known method can be employed. Specific examples of the method include a die coating method, a dip coating method, a roll coating method, a doctor coating method, a knife coating method, a spray coating method, a gravure coating method, a screen printing method, and an electrostatic coating method. As for the drying method, in addition to the drying method by leaving the applied dispersion, a method using a blower dryer, a warm air dryer, an infrared heater, a far infrared heater, or the like can be employed, but the method is not particularly limited thereto.

It is also possible to subject the current collector after the application of the dispersion to rolling using a lithographic press, a calendar roll, or the like.

### <Lithium ion secondary battery>

Various batteries such as a lithium ion secondary battery can be formed by using an electrode including the battery electrode mixture layer of the present invention, a counter electrode, an electrolyte, a separator, and the like.

### Examples

Hereinafter, the present invention will be described in detail with reference to examples, but the present invention is not limited to the following examples unless the gist of the present invention is exceeded. In the examples, "part" means "part by weight", and "%" means "wt%".

The carbon nanotubes (A) (sometimes abbreviated as "CNTs"), the polyvinylpyrrolidone (B) (sometimes abbreviated as "PVP"), and the amine-based compound (D) used in the examples and comparative examples are shown below.

Each table shows only the compositions of raw materials, and the rest of the components not particularly shown in the tables are all N-methyl-2-pyrrolidone (NMP).

### <Carbon nanotubes (A)>

- JENOTUBE 8A:
   manufactured by JEIO Co., Ltd., multi-walled CNTs, 6 to 9 nm in outer diameter
- K-Nanos 100T:
   manufactured by Kumho Petrochemical Co., Ltd., multi-walled CNTs, 10 to 15 nm in outer diameter

### (hereinafter abbreviated as 100T)

- HCNTs10:
   manufactured by SUSUN Sinotech New Materials, multi-walled CNTs, 10 to 20 nm in outer diameter
- NTP 3121:
   manufactured by Shenzhen Nanotech Port Co., Ltd., 20 to 35 nm in outer diameter
- TUBALL:
   manufactured by OCSiAl, single-walled CNTs, 1.2 to 2.0 nm in outer diameter

### <Polyvinylpyrrolidone (B)>

- PVP K-120:
   manufactured by ISP Inc., Mw 3,000,000
- PVP K-90:
   manufactured by ISP Inc., Mw 1,300,000
- PVP K-30:
   manufactured by NIPPON SHOKUBAI CO., LTD., K-value 27.0 to 33.0, Mw 40,000
- PVP Mw 2500:
   manufactured by Polysciences, Inc., Mw 2,500
- PVP Mw 4000 to 6000:
   manufactured by Polysciences, Inc., Mw 4,000 to 6,000

### <Amine-based compound (D)>

- n-Butylamine:
   aliphatic primary amine, molecular formula C₄H₉NH₂, molecular weight 73
- n-Octylamine:
   aliphatic primary amine, molecular formula C₈H₁₇NH₂, molecular weight 129

### (hereinafter abbreviated as octylamine)

- Stearylamine:
   aliphatic primary amine, molecular formula C₁₈H₃₇NH₂, molecular weight 269.5
- Diethylamine:
   aliphatic secondary amine, molecular formula C₄H₁₁N, molecular weight 73
- Distearylamine:
   aliphatic secondary amine, molecular formula C₃₆H₇₅N, molecular weight 522
- Triethylamine:
   aliphatic tertiary amine, molecular formula C₆H₁₅N, molecular weight 101
- Tri-n-octylamine:
   aliphatic tertiary amine, molecular formula C₂₄H₅₁N, molecular weight 354

### (hereinafter abbreviated as trioctylamine)

- Ethanolamine:
   alkanolamine-based primary amine, molecular formula C₂H₇NO, molecular weight 61
- Triethanolamine:
   alkanolamine-based tertiary amine, molecular formula C₆H₁₅NO₃, pKa = 7.6
- Amit 102 (manufactured by Kao Corporation):
   polyoxyethylene dodecylamine (average number of moles of EO added = 2 mol, tertiary amine)
- Amit 105 (manufactured by Kao Corporation):
   polyoxyethylene dodecylamine (average number of moles of EO added = 5 mol, tertiary amine)
- Amit 302 (manufactured by Kao Corporation):
   polyoxyethylene octadecylamine (average number of moles of EO added = 2 mol, tertiary amine)
- Amit 320 (manufactured by Kao Corporation):
   polyoxyethylene octadecylamine (average number of moles of EO added = 20 mol, tertiary amine)
- Polyethyleneimine 1200 (manufactured by JUNSEI CHEMICAL CO., LTD.):
   molecular weight 1,200, amine value 19 (hereinafter abbreviated as PEI1200)
- Polyethyleneimine 1800 (manufactured by JUNSEI CHEMICAL CO., LTD.):
   molecular weight 1,800, amine value 19 (hereinafter abbreviated as PEI1800)
- Polyethyleneimine 10000 (manufactured by JUNSEI CHEMICAL CO., LTD.):
   molecular weight 10,000, amine value 18 (hereinafter abbreviated as PEI10000)
- Hexamethylenetetramine:
   nitrogen-containing alicyclic heterocyclic compound (tertiary amine), molecular formula C₆H₁₂N₄
- L-aspartic acid:
   acidic amino acid, molecular formula C₄H₇NO₂ (hereinafter abbreviated as aspartic acid)
- L-asparagine monohydrate:
   neutral amino acid, molecular formula C₄H₈N₂O₃ (hereinafter abbreviated as asparagine)

### <Method for evaluating carbon nanotube dispersion>

Carbon nanotube dispersions obtained in the examples and comparative examples were evaluated by measuring the viscosity.

Using a B-type viscometer ("BL" manufactured by Toki Sangyo Co., Ltd.), the dispersion was sufficiently stirred with a spatula at a dispersion temperature of 25°C and a rotor rotation speed of the B-type viscometer of 60 rpm, and then the value of viscosity was immediately measured. The rotor used in the measurement was No. 1 when the value of viscosity was less than 100 mPa·s, No. 2 when the value of viscosity was 100 mPa·s or more and less than 500 mPa·s, No. 3 when the value of viscosity was 500 mPa·s or more and less than 2,000 mPa·s, and No. 4 when the value of viscosity was 2,000 mPa·s or more and less than 10,000 mPa·s. When the obtained value of viscosity was 10,000 mPa·s or more, the value was described as "> 10,000", which means that the viscosity was so high that it was unmeasurable by the B-type viscometer used in the evaluation. The lower the viscosity was, the better the dispersibility of carbon nanotubes was, and the higher the viscosity was, the poorer the dispersibility of carbon nanotubes was.

The storage stability was evaluated based on the change in the value of viscosity after the carbon nanotube dispersion was left standing at 50°C for 10 days. The smaller the change was, the better the stability was.

### <Preparation and evaluation of carbon nanotube dispersion>

According to the compositions shown in Tables 1A and 1B, NMP (C) (manufactured by Mitsubishi Chemical Corporation), the relevant type of polyvinylpyrrolidone (B), and the relevant type of amine-based compound (D) were charged in a glass bottle, and sufficiently mixed and dissolved or mixed and dispersed. Then, the relevant type of carbon nanotubes (A) were added to the resulting mixture, and the mixture was dispersed with a paint shaker for 7 hours using 1.25 mmϕ zirconia beads as media to produce a carbon nanotube dispersion of each example. The results of viscosity evaluation of the dispersions are shown in Table 2. The dispersions obtained as examples all had a low viscosity and satisfactory storage stability. Meanwhile, the dispersions obtained as comparative examples (Comparative Examples 1-1 and 1-2) were both in a high-viscosity state, indicating that the carbon nanotubes were not sufficiently dispersed. These results revealed that use of PVP alone as a dispersant does not provide a desired high-concentration, low-viscosity carbon nanotube dispersion. It seems that in Comparative Example 1-3, combination use of the PVP (B) and the amine compound (D) contributed to satisfactory dispersibility. However, due to the high content of the PVP (B) relative to the CNTs (A), an electrode containing the dispersion of Comparative Example 1-3 has high volume resistivity as described later (see Table 4).

**[Table 1A]**

| | CNT (A) | | | PVP (B) | | Amine compound (D) | | | NMP (C) |
|---|---|---|---|---|---|---|---|---|---|
| | Name | Outer Diameter (nm) | Content (%) | Name | Content (%) | Name | | Content (%) | Content (%) ) |
| Ex. 1-1 | JENOTUBE8A | 6-9 | 2.0 | K-30 | 0.50 | octylamine | aliphatic primary amine | 0.2 | 97.30 |
| Ex. 1-2 | 100T | 10-15 | 5.0 | K-30 | 1.00 | octylamine | aliphatic primary amine | 0.25 | 93.75 |
| Ex. 1-3 | HCNTs10 | 10-20 | 5.0 | K-120 | 1.00 | octylamine | aliphatic primary amine | 0.25 | 93.75 |
| Ex. 1-4 | HCNTs10 | 10-20 | 5.0 | K-90 | 1.00 | octylamine | aliphatic primary amine | 0.25 | 93.75 |
| Ex. 1-5 | HCNTs10 | 10-20 | 5.0 | K-30 | 1.25 | octylamine | aliphatic primary amine | 0.25 | 93.51 |
| Ex. 1-6 | HCNTs10 | 10-20 | 5.0 | K-30 | 1.00 | octylamine | aliphatic primary amine | 0.5 | 93.50 |
| Ex. 1-7 | HCNTs10 | 10-20 | 5.0 | K-30 | 1.00 | octylamine | aliphatic primary amine | 0.25 | 93.75 |
| Ex. 1-8 | HCNTs10 | 10-20 | 5.0 | K-30 | 1.00 | octylamine | aliphatic primary amine | 0.2 | 93.80 |
| Ex. 1-9 | HCNTs10 | 10-20 | 5.0 | K-30 | 1.00 | octylamine | aliphatic primary amine | 0.15 | 93.85 |
| Ex. 1-10 | HCNTs10 | 10-20 | 5.0 | K-30 | 1.00 | octylamine | aliphatic primary amine | 0.1 | 93.90 |
| Ex. 1-11 | HCNTs10 | 10-20 | 5.0 | K-30 | 0.75 | octylamine | aliphatic primary amine | 0.25 | 94.00 |
| Ex. 1-12 | HCNTs10 | 10-20 | 5.0 | K-30 | 1.00 | stearylamine | aliphatic primary amine | 0.25 | 93.75 |
| Ex. 1-13 | HCNTs10 | 10-20 | 5.0 | K-30 | 1.00 | butylamine | aliphatic primary amine | 0.25 | 93.75 |
| Ex. 1-14 | HCNTs10 | 10-20 | 5.0 | K-30 | 1.00 | diethylamine | aliphatic secondary amine | 0.25 | 93.75 |
| Ex. 1-15 | HCNTs10 | 10-20 | 5.0 | K-30 | 1.00 | distearylamine | aliphatic secondary amine | 0.25 | 93.75 |
| Ex. 1-16 | HCNTs10 | 10-20 | 5.0 | K-30 | 1.00 | triethylamine | aliphatic tertiary amine | 0.25 | 93.75 |
| Ex. 1-17 | HCNTs10 | 10-20 | 5.0 | K-30 | 1.00 | trioctylamine | aliphatic tertiary amine | 0.25 | 93.75 |
| Ex. 1-18 | HCNTs10 | 10-20 | 5.0 | K-30 | 1.00 | ethanolamine | alkanolamine | 0.25 | 93.75 |
| Ex. 1-19 | HCNTs10 | 10-20 | 5.0 | K-30 | 1.00 | triethanolamine | alkanolamine | 0.25 | 93.75 |
| Ex. 1-20 | HCNTs10 | 10-20 | 5.0 | K-30 | 1.00 | Amit 102 | polyoxyalkyleneamine | 0.25 | 93.75 |

**[Table 1B]**

| | CNT (A) | | | PVP (B) | | Amine compound (D) | | | NMP (C) |
|---|---|---|---|---|---|---|---|---|---|
| | Name | Outer Diameter (nm) | Content (%) | Name | Content (%) | Name | | Content (%) | Content (%) ) |
| Ex. 1-21 | HCNTs10 | 10-20 | 5.0 | K-30 | 0.75 | Amit 105 | polyoxyalkyleneamine | 0.25 | 94.00 |
| Ex. 1-22 | HCNTs10 | 10-20 | 5.0 | K-30 | 0.75 | Amit 302 | polyoxyalkyleneamine | 0.25 | 94.00 |
| Ex. 1-23 | HCNTs10 | 10-20 | 5.0 | K-30 | 0.75 | Amit 320 | polyoxyalkyleneamine | 0.25 | 94.00 |
| Ex. 1-24 | HCNTs10 | 10-20 | 5.0 | K-30 | 1.25 | asparagine acid | amino acid | 0.25 | 93.51 |
| Ex. 1-25 | HCNTs10 | 10-20 | 5.0 | K-30 | 1.25 | asparagine | amino acid | 0.25 | 93.51 |
| Ex. 1-26 | HCNTs10 | 10-20 | 5.0 | K-30 | 0.63 | PEI1200 | polyamine | 0.25 | 94.13 |
| Ex. 1-27 | HCNTs10 | 10-20 | 5.0 | K-30 | 0.63 | PEI1800 | polyamine | 0.25 | 94.13 |
| Ex. 1-28 | HCNTs10 | 10-20 | 5.0 | K-30 | 0.63 | PEI10000 | polyamine | 0.25 | 94.13 |
| Ex. 1-29 | HCNTs10 | 10-20 | 5.0 | K-30 | 1.00 | hexamethylene tetramine | nitrogen-containing alicyclic heterocycle | 0.25 | 93.75 |
| Ex. 1-30 | NTP3121 | 20-35 | 5.0 | K-30 | 1.00 | octylamine | aliphatic primary amine | 0.25 | 93.75 |
| Ex. 1-31 | TUBALL | 1.2-2.0 | 0.2 | K-30 | 0.05 | octylamine | aliphatic primary amine | 0.02 | 99.73 |
| Ex. 1-32 | HCNTs10 | 10-20 | 5.0 | Mw 2500 | 1.00 | octylamine | aliphatic primary amine | 0.25 | 93.75 |
| Ex. 1-33 | HCNTs10 | 10-20 | 5.0 | Mw 4000-6000 | 1.00 | octylamine | aliphatic primary amine | 0.25 | 93.75 |
| | | | | | | | | | |
| Com Ex. 1-1 | JENOTUBE8A | 6-9 | 1.0 | K-30 | 0.25 | - | - | 0 | 98.75 |
| Com Ex. 1-2 | HCNTs10 | 10-20 | 5.0 | K-30 | 1.25 | - | - | 0 | 93.75 |
| Com Ex. 1-3 | HCNTs10 | 10-20 | 5.0 | K-30 | 1.50 | octylamine | aliphatic primary amine | 0.25 | 93.25 |

**[Table 2]**

| | Amount of PVP to CNT 100 parts (part) | Amount of Amine compound to CNT 100 parts (part) | Dispersion viscosity (mPa·s) | |
|---|---|---|---|---|
| | | | Initial evaluation B-type 60rpm | Stability evaluation 50°C for 10 days |
| Ex. 1-1 | 24.9 | 10 | 2,650 | 3,850 |
| Ex. 1-2 | 20 | 5 | 440 | 550 |
| Ex. 1-3 | 20 | 5 | 1,120 | 1,400 |
| Ex. 1-4 | 20 | 5 | 800 | 960 |
| Ex. 1-5 | 24.9 | 5 | 380 | 420 |
| Ex. 1-6 | 20 | 10 | 510 | 540 |
| Ex. 1-7 | 20 | 5 | 500 | 590 |
| Ex. 1-8 | 20 | 4 | 640 | 770 |
| Ex. 1-9 | 20 | 3 | 780 | 1,060 |
| Ex. 1-10 | 20 | 2 | 920 | 1,340 |
| Ex. 1-11 | 15 | 5 | 750 | 860 |
| Ex. 1-12 | 20 | 5 | 800 | 1,020 |
| Ex. 1-13 | 20 | 5 | 402 | 480 |
| Ex. 1-14 | 20 | 5 | 610 | 760 |
| Ex. 1-15 | 20 | 5 | 880 | 1,180 |
| Ex. 1-16 | 20 | 5 | 890 | 1,110 |
| Ex. 1-17 | 20 | 5 | 1,020 | 1,290 |
| Ex. 1-18 | 20 | 5 | 440 | 530 |
| Ex. 1-19 | 20 | 5 | 1,200 | 1,420 |
| Ex. 1-20 | 20 | 5 | 580 | 790 |
| Ex. 1-21 | 15 | 5 | 850 | 1,100 |
| Ex. 1-22 | 15 | 5 | 930 | 1,140 |
| Ex. 1-23 | 15 | 5 | 990 | 1,280 |
| Ex. 1-24 | 24.9 | 5 | 1,240 | 1,520 |
| Ex. 1-25 | 24.9 | 5 | 1,180 | 1,470 |
| Ex. 1-26 | 12.5 | 5 | 850 | 1,190 |
| Ex. 1-27 | 12.5 | 5 | 730 | 1,088 |
| Ex. 1-28 | 12.5 | 5 | 670 | 980 |
| Ex. 1-29 | 20 | 5 | 770 | 990 |
| Ex. 1-30 | 20 | 5 | 120 | 130 |
| Ex. 1-31 | 24.9 | 10 | 150 | 180 |
| Ex. 1-32 | 20 | 5 | 580 | 730 |
| Ex. 1-33 | 20 | 5 | 450 | 520 |
| | | | | |
| Com Ex. 1-1 | 25 | 0 | >10,000 | >10,000 |
| Com Ex. 1-2 | 25 | 0 | >10,000 | >10,000 |
| Com Ex. 1-3 | 30 | 5 | 330 | 370 |

### <Preparation and evaluation of electrode mixture slurry>

According to the compositions shown in Tables 3A and 3B, the relevant type of carbon nanotube dispersion prepared as described above in each of the examples and comparative examples, and an NMP solution (solid content: 5%) of W#7300 (polyvinylidene fluoride manufactured by KUREHA CORPORATION) as a binder were charged into a 100-mL vessel, and stirred and homogenized with a disper (dissolver: 30 mmΦ) at 1,500 rpm for 2 minutes. Then, with the liquid being stirred, LiNi_{(1/3)}Mn_{(1/3)}Co_{(1/3)}O₂ (hereinafter abbreviated as NMC) having an average particle size of 11.5 µm as a positive electrode active material was gradually added to the liquid. Then, the resulting mixture was mixed with a disper at 5,500 rpm for 30 minutes to produce an electrode mixture slurry. The results of viscosity evaluation of the electrode mixture slurries are shown in Tables 3A and 3B. As can be seen from the evaluation results of Comparative Examples 2-1 and 2-2, use of PVP alone as a dispersant provides a mixture slurry having a higher viscosity than those of examples. It seems that in Comparative Example 2-3, combination use of the PVP (B) and the amine compound (D) contributed to a low viscosity of the mixture slurry. However, due to the high content of the PVP (B) relative to the CNTs (A), an electrode containing the mixture slurry of Comparative Example 2-3 has high volume resistivity as described later (see Table 4).

**[Table 3A]**

| | Ingredient of electrode mixture slurry | | | | | | | | | Initial evaluation |
|---|---|---|---|---|---|---|---|---|---|---|
| | Active material | | Binder solution | | CNT dispersion | | | | | |
| | Name | Content (part) | Content (part) | PVDF Content (part) | Dispersion used | Dispersion Content (part) | CNT content (part) | PVP content (part) | Amine compound content (part) | Viscosity B-type 60rpm (mPa·s) |
| Ex. 2-1 | NMC | 98.2 | 30 | 1.5 | Ex. 1-1 | 15.0 | 0.3 | 0.08 | 0.03 | 6,950 |
| Ex. 2-2 | NMC | 98.2 | 30 | 1.5 | Ex. 1-2 | 6.0 | 0.3 | 0.06 | 0.015 | 4,900 |
| Ex. 2-3 | NMC | 98.2 | 30 | 1.5 | Ex. 1-3 | 6.0 | 0.3 | 0.06 | 0.015 | 6,500 |
| Ex. 2-4 | NMC | 98.2 | 30 | 1.5 | Ex. 1-4 | 6.0 | 0.3 | 0.06 | 0.015 | 6,100 |
| Ex. 2-5 | NMC | 98.2 | 30 | 1.5 | Ex. 1-5 | 6.0 | 0.3 | 0.08 | 0.015 | 5,100 |
| Ex. 2-6 | NMC | 98.2 | 30 | 1.5 | Ex. 1-6 | 6.0 | 0.3 | 0.06 | 0.03 | 6,900 |
| Ex. 2-7 | NMC | 98.2 | 30 | 1.5 | Ex. 1-7 | 6.0 | 0.3 | 0.06 | 0.015 | 5,250 |
| Ex. 2-8 | NMC | 98.2 | 30 | 1.5 | Ex. 1-8 | 6.0 | 0.3 | 0.06 | 0.012 | 6,300 |
| Ex. 2-9 | NMC | 98.2 | 30 | 1.5 | Ex. 1-9 | 6.0 | 0.3 | 0.06 | 0.009 | 7,550 |
| Ex. 2-10 | NMC | 98.2 | 30 | 1.5 | Ex. 1-10 | 6.0 | 0.3 | 0.06 | 0.006 | 8,850 |
| Ex. 2-11 | NMC | 98.2 | 30 | 1.5 | Ex. 1-11 | 6.0 | 0.3 | 0.05 | 0.015 | 7,150 |
| Ex. 2-12 | NMC | 98.2 | 30 | 1.5 | Ex. 1-12 | 6.0 | 0.3 | 0.06 | 0.015 | 7,850 |
| Ex. 2-13 | NMC | 98.2 | 30 | 1.5 | Ex. 1-13 | 6.0 | 0.3 | 0.06 | 0.015 | 4,750 |
| Ex. 2-14 | NMC | 98.2 | 30 | 1.5 | Ex. 1-14 | 6.0 | 0.3 | 0.06 | 0.015 | 6,900 |
| Ex. 2-15 | NMC | 98.2 | 30 | 1.5 | Ex. 1-15 | 6.0 | 0.3 | 0.06 | 0.015 | 7,450 |
| Ex. 2-16 | NMC | 98.2 | 30 | 1.5 | Ex. 1-16 | 6.0 | 0.3 | 0.06 | 0.015 | 8,100 |
| Ex. 2-17 | NMC | 98.2 | 30 | 1.5 | Ex. 1-17 | 6.0 | 0.3 | 0.06 | 0.015 | 8,000 |
| Ex. 2-18 | NMC | 98.2 | 30 | 1.5 | Ex. 1-18 | 6.0 | 0.3 | 0.06 | 0.015 | 5,100 |
| Ex. 2-19 | NMC | 98.2 | 30 | 1.5 | Ex. 1-19 | 6.0 | 0.3 | 0.06 | 0.015 | 8,250 |
| Ex. 2-20 | NMC | 98.2 | 30 | 1.5 | Ex. 1-20 | 6.0 | 0.3 | 0.06 | 0.015 | 6,200 |

**[Table 3B]**

| | Ingredient of electrode mixture slurry | | | | | | | | | Initial evaluation |
|---|---|---|---|---|---|---|---|---|---|---|
| | Active material | | Binder solution | | CNT dispersion | | | | | |
| | Name | Content (part) | Content (part) | PVDF Content (part) | Dispersion used | Dispersion Content (part) | CNT content (part) | PVP content (part) | Amine compound content (part) | Viscosity B-type 60rpm (mPa·s) |
| Ex. 2-21 | NMC | 98.2 | 30 | 1.5 | Ex. 1-21 | 6.0 | 0.3 | 0.05 | 0.015 | 7,600 |
| Ex. 2-22 | NMC | 98.2 | 30 | 1.5 | Ex. 1-22 | 6.0 | 0.3 | 0.05 | 0.015 | 8,500 |
| Ex. 2-23 | NMC | 98.2 | 30 | 1.5 | Ex. 1-23 | 6.0 | 0.3 | 0.05 | 0.015 | 8,350 |
| Ex. 2-24 | NMC | 98.2 | 30 | 1.5 | Ex. 1-24 | 6.0 | 0.3 | 0.08 | 0.015 | 8,500 |
| Ex. 2-25 | NMC | 98.2 | 30 | 1.5 | Ex. 1-25 | 6.0 | 0.3 | 0.08 | 0.015 | 8,100 |
| Ex. 2-26 | NMC | 98.2 | 30 | 1.5 | Ex. 1-26 | 6.0 | 0.3 | 0.04 | 0.015 | 8,000 |
| Ex. 2-27 | NMC | 98.2 | 30 | 1.5 | Ex. 1-27 | 6.0 | 0.3 | 0.04 | 0.015 | 7,700 |
| Ex. 2-28 | NMC | 98.2 | 30 | 1.5 | Ex. 1-28 | 6.0 | 0.3 | 0.04 | 0.015 | 6,800 |
| Ex. 2-29 | NMC | 98.2 | 30 | 1.5 | Ex. 1-29 | 6.0 | 0.3 | 0.06 | 0.015 | 7,500 |
| Ex. 2-30 | NMC | 98.2 | 30 | 1.5 | Ex. 1-30 | 6.0 | 0.3 | 0.06 | 0.015 | 6,000 |
| Ex. 2-31 | NMC | 98.2 | 30 | 1.5 | Ex. 1-31 | 150.0 | 0.3 | 0.08 | 0.03 | 2,200 |
| Ex. 2-32 | NMC | 98.2 | 30 | 1.5 | Ex. 1-32 | 6.0 | 0.3 | 0.06 | 0.015 | 7,200 |
| Ex. 2-33 | NMC | 98.2 | 30 | 1.5 | Ex. 1-33 | 6.0 | 0.3 | 0.06 | 0.015 | 5,500 |
| | | | | | | | | | | |
| Com Ex. 2-1 | NMC | 98.2 | 30 | 1.5 | Com Ex. 1-1 | 30.0 | 0.3 | 0.08 | 0 | >10,000 |
| Com Ex. 2-2 | NMC | 98.2 | 30 | 1.5 | Com Ex. 1-2 | 6.0 | 0.3 | 0.08 | 0 | >10,000 |
| Com Ex. 2-3 | NMC | 98.2 | 30 | 1.5 | Com Ex. 1-3 | 6.0 | 0.3 | 0.09 | 0.015 | 4,050 |

### <Production and evaluation of battery electrode mixture layer>

The battery electrode mixture slurry of each of the examples and comparative examples prepared as described above was applied to a polyethylene terephthalate (PET) film using an applicator so that the resulting coating film would have a thickness of 70 ± 10 µm, and then dried at 120 + 5°C for 30 minutes. Then, the surface resistivity (Ω/□) of the dried coating film was measured using Loresta GP (CP-T610) manufactured by Mitsubishi Chemical Analytech Co., Ltd. After the measurement, the thickness of the electrode mixture layer formed on the PET film was multiplied by the surface resistivity to calculate the volume resistivity (Ω·cm) of the electrode film. The thickness of the electrode mixture layer was obtained by subtracting the thickness of the PET film from the average of three points measured in the electrode film using a film thickness meter (DIGIMICRO MH-15M manufactured by NIKON CORPORATION). The evaluation results are shown in Table 4. All the electrodes of the examples exhibited satisfactory results, that is, a volume resistivity value of less than 100 [Ω·cm]. All the electrodes of the comparative examples exhibited a volume resistivity value much higher than 100 [Ω·cm] and were inadequate for lithium ion batteries. It seems that use of the PVP (B) alone as a dispersant (Comparative Examples 3-1 and 3-2) does not provide sufficient dispersibility of the carbon nanotubes (CNTs) (A), and in particular, under a low CNT content of 0.3 wt% in the electrode mixture layer, a conductive path is not formed well and the electrode has high resistance. Further, it seems that even in combination use of the PVP (B) and the amine compound (D) (Comparative Example 3-3), if the content of the PVP (B) relative to the CNTs (A) is high, the PVP (B) serving as a resistance component cancels out the effect of dispersing the CNTs (A).

**[Table 4]**

| | Electrode mixture slurry | Amount of PVP to CNT 100 parts (part) | Amount of Amine compound to CNT 100 parts (part) | Evaluation Electrode Volume resistivity (Ω·cm) |
|---|---|---|---|---|
| Ex. 3-1 | Ex. 2-1 | 24.9 | 10 | 25 |
| Ex. 3-2 | Ex. 2-2 | 20 | 5 | 35 |
| Ex. 3-3 | Ex. 2-3 | 20 | 5 | 59 |
| Ex. 3-4 | Ex. 2-4 | 20 | 5 | 60 |
| Ex. 3-5 | Ex. 2-5 | 24.9 | 5 | 83 |
| Ex. 3-6 | Ex. 2-6 | 20 | 10 | 63 |
| Ex. 3-7 | Ex. 2-7 | 20 | 5 | 52 |
| Ex. 3-8 | Ex. 2-8 | 20 | 4 | 63 |
| Ex. 3-9 | Ex. 2-9 | 20 | 3 | 65 |
| Ex. 3-10 | Ex. 2-10 | 20 | 2 | 71 |
| Ex. 3-11 | Ex. 2-11 | 15 | 5 | 65 |
| Ex. 3-12 | Ex. 2-12 | 20 | 5 | 66 |
| Ex. 3-13 | Ex. 2-13 | 20 | 5 | 45 |
| Ex. 3-14 | Ex. 2-14 | 20 | 5 | 68 |
| Ex. 3-15 | Ex. 2-15 | 20 | 5 | 72 |
| Ex. 3-16 | Ex. 2-16 | 20 | 5 | 76 |
| Ex. 3-17 | Ex. 2-17 | 20 | 5 | 76 |
| Ex. 3-18 | Ex. 2-18 | 20 | 5 | 50 |
| Ex. 3-19 | Ex. 2-19 | 20 | 5 | 68 |
| Ex. 3-20 | Ex. 2-20 | 20 | 5 | 70 |

| | Electrode mixture slurry | Amount of PVP to CNT 100 parts (part) | Amount of Amine compound to CNT 100 parts (part) | Evaluation |
|---|---|---|---|---|
| | | | | Electrode Volume resistivity (Ω·cm) |
| Ex. 3-21 | Ex. 2-21 | 15 | 5 | 66 |
| Ex. 3-22 | Ex. 2-22 | 15 | 5 | 64 |
| Ex. 3-23 | Ex. 2-23 | 15 | 5 | 61 |
| Ex. 3-24 | Ex. 2-24 | 24.9 | 5 | 82 |
| Ex. 3-25 | Ex. 2-25 | 24.9 | 5 | 85 |
| Ex. 3-26 | Ex. 2-26 | 12.5 | 5 | 66 |
| Ex. 3-27 | Ex. 2-27 | 12.5 | 5 | 72 |
| Ex. 3-28 | Ex. 2-28 | 12.5 | 5 | 70 |
| Ex. 3-29 | Ex. 2-29 | 20 | 5 | 73 |
| Ex. 3-30 | Ex. 2-30 | 20 | 5 | 95 |
| Ex. 3-31 | Ex. 2-31 | 24.9 | 10 | 90 |
| Ex. 3-32 | Ex. 2-32 | 20 | 5 | 93 |
| Ex. 3-33 | Ex. 2-33 | 20 | 5 | 98 |
| | | | | |
| Com Ex. 3-1 | Com Ex. 2-1 | 25 | 0 | 320 |
| Com Ex. 3-2 | Com Ex. 2-2 | 25 | 0 | 260 |
| Com Ex. 3-3 | Com Ex. 2-3 | 30 | 5 | 193 |

## Claims

1. A carbon nanotube dispersion comprising:
(A) carbon nanotubes;
(B) polyvinylpyrrolidone;
(C) N-methyl-2-pyrrolidone; and
(D) an amine-based compound,
the carbon nanotube dispersion comprising, based on 100 parts by weight of the carbon nanotubes (A), 10 parts by weight or more and less than 25 parts by weight of the polyvinylpyrrolidone (B), and 2 parts by weight or more and 10 parts by weight or less of the amine-based compound (D).

2. The carbon nanotube dispersion according to claim 1, **characterized in that** the amine-based compound (D) is at least one amine-based compound selected from the group consisting of an aliphatic primary amine, an aliphatic secondary amine, an aliphatic tertiary amine, an amino acid, an alkanolamine, a polyoxyalkylene alkylamine, a polyamine, and a nitrogen-containing alicyclic heterocyclic compound.

3. A carbon nanotube dispersion for an electrode comprising:
the carbon nanotube dispersion according to claim 1 or 2; and
an electrode active material.

4. A battery electrode mixture layer comprising the carbon nanotube dispersion for an electrode according to claim 3 formed into a layer.

5. A lithium ion secondary battery comprising the battery electrode mixture layer according to claim 4.
